Europäisches Patentamt

European Patent Office

Office européen des brevets

(11) Veröffentlichungsnummer : **0 065 343**
**B1**

(12) **EUROPÄISCHE PATENTSCHRIFT**

(45) Veröffentlichungstag der Patentschrift :
17.08.88

(21) Anmeldenummer : 82200597.1

(22) Anmeldetag : 17.05.82

(51) Int. Cl.⁴ : **G 02 F   1/09, G 02 B   6/04**

(54) Vorrichtung zur Einkopplung von Licht in magneto-optische Lichtschaltzeilen, insbesondere für optische Drucker.

(30) Priorität : 19.05.81 DE 3119784

(43) Veröffentlichungstag der Anmeldung :
24.11.82 Patentblatt 82/47

(45) Bekanntmachung des Hinweises auf die Patenterteilung : 17.08.88 Patentblatt 88/33

(84) Benannte Vertragsstaaten :
DE FR GB SE

(56) Entgegenhaltungen :
DE-A- 2 606 596
FR-A- 2 262 842
US-A- 3 737 236

(73) Patentinhaber : Philips Patentverwaltung GmbH
Wendenstrasse 35 Postfach 10 51 49
D-2000 Hamburg 1 (DE)
DE
N.V. Philips' Gloeilampenfabrieken
Groenewoüdseweg 1
NL-5621 BA Eindhoven (NL)
FR GB SE

(72) Erfinder : Hill, Bernhard
Paul-Sorge-Strasse 142b
D-2000 Hamburg 61 (DE)
Erfinder : Much, Gerd
Holunderweg 8a
D-2000 Norderstedt (DE)

(74) Vertreter : Hartmann, Heinrich, Dipl.-Ing. et al
Philips Patentverwaltung GmbH Wendenstrasse 35
Postfach 10 51 49
D-2000 Hamburg 1 (DE)

## Beschreibung

Die Erfindung betrifft eine Vorrichtung zum Beleuchten einer zeilenförmigen, aus einer Vielzahl von magneto-optischen Lichtmodulationselementen bestehenden, zwischen Polarisatoren liegenden Lichtschaltmaske, mit einer Lichtquelle, sowie einer Übertragungsoptik zur Übertragung eines möglichst großen Anteils des von der Lichtquelle abgestrahlten Lichtes auf die Lichtschaltmaske, und mit wenigstens einem im Lichtweg zwischen der Lichtquelle und der Lichtschaltmaske angeordneten optischen Körper zur Homogenisierung der Lichtverteilung.

Lichtschaltmasken, die eine Vielzahl von zeilenförmig angeordneten, magneto-optischen Lichtmodulationselementen, z. B. Eisengranatschichten, besitzen, sind allgemein bekannt, beispielsweise aus der DE-A-2 606 596. Sie bilden, zwischen Polarisationsfolien angeordnet, sog. Lichtventile, deren optische Transmission durch Änderung der Magnetisierungsrichtung der jeweiligen magneto-optischen Modulationselemente veränderbar ist.

Aus der DE-A-2 812 206 ist weiter bekannt, magneto-optische Drucker mit derartigen Lichtventilen auszustatten. Die Lichtschaltmasken werden dabei mittels einer stabförmigen Lampe über ein aus Linsen- und Ablenkspiegeln bestehendes Abbildungssystem ausgeleuchtet, so daß in Transmission ein elektronisch schaltbares Lichtpunktmuster, z. B. in Form einer Zeile von Lichtpunkten, erzeugbar ist. Dieses Lichtpunktmuster wird mit Hilfe einer weiteren Optik auf einen Aufzeichnungsträger, z. B. auf ein photographisches oder elektrophotographisches Material oder dergl., abgebildet. Der Aufzeichnungsträger kann dabei mechanisch an der Lichtpunktzeile in zu ihr senkrechter Richtung vorbeigeführt und zeilenweise belichtet werden.

Bei magneto-optischen Druckern der genannten Art ist es u. a. wichtig, daß die Lichtschaltmasken zur Erzeugung eines einwandfreien Druckbildes mit einer relativ hohen Intensität bestrahlt und dabei möglichst gleichmäßig ausgeleuchtet werden. Problematisch ist dabei, daß die auszuleuchtende Fläche einer Lichtpunktzeile einem langen und sehr dünnen Streifen entspricht, und damit nicht an die übliche Geometrie von Lampen angepaßt ist. Z. B. besitzen die magneto-optischen Modulationselemente einer Lichtschaltmaske eine optische Öffnung von 50 bis 100 μm und überdecken insgesamt die Breite einer DIN A 4 — Seite von ca. 20 cm. Auszuleuchten ist also eine Fläche von ca. 100 μm × 20 cm.

Zur Ausleuchtung einer derartigen Zeile ist in der DE-A-2 812 206 eine stabförmige Lampe (Strichsoffitten-Lampe) vorgesehen, deren Strahlung mit Hilfe einer Zylinderlinse auf die Lichtschaltmaske übertragen wird. Dabei liegt die Längsachse der Zylinderlinse parallel zur Längsrichtung der Lampe. Bei Verwendung von Lampen mit anderer Geometrie eignet sich das aus einer Zylinderlinse und einem Ablenkspiegel bestehende Übertragungssystem jedoch nicht mehr zur gleichmäßigen Ausleuchtung der Lichtschaltmaske. Diese würde an ihren Enden dann weniger Strahlung empfangen als in der Mitte. Hieran könnte auch eine zwischen der Lichtschaltmaske und dem Ablenkspiegel angeordnete, diffuses Licht erzeugende Streuscheibe nichts ändern.

Aufgabe der Erfindung ist es, eine Vorrichtung zu schaffen, mit deren Hilfe zeilenförmige Lichtschaltmasken auch durch Lichtquellen, die keine zeilenförmige Ausdehnung besitzen, gleichmäßig beleuchtet werden können.

Diese Aufgabe wird gemäß der Erfindung dadurch gelöst, daß die Übertragungsoptik aus einem Lichtleiter-Querschnittswandler besteht, dessen Eingangsfläche der Geometrie der Lichtquelle und dessen Ausgangsfläche der Geometrie der zeilenförmigen Lichtschaltmaske angepaßt ist, und daß zwischen dem Lichtleiter-Querschnittswandler und der Lichtschaltmaske eine dünne Lichtleitplatte angeordnet ist, in deren Plattenebene die Zeilenrichtung sowohl der Austrittsfläche des Lichtleiter-Querschnittswandlers als auch der Lichtschaltmaske verläuft.

Durch den als Übertragungsoptik eingesetzten Lichtleiter-Querschnittswandler wird erreicht, daß das Licht aus Lampen mit unterschiedlicher Geometrie optimal über eine zeilenförmig ausgebildete Schaltmaske verteilt werden kann. Dabei kann der Lichtleiter-Querschnittswandler aus einer größeren Anzahl von Lichtleitfasern aus Glas oder Kunststoff bestehen, die an beiden Enden zu unterschiedlichen Querschnittsformen zusammengefaßt (gebündelt) sind. Beispielsweise können die Lichtleitfasern an einem Ende in einem Querschnitt von 100 μm × 20 cm angeordnet und am anderen Ende zu einem runden Querschnitt gleichen Flächeninhalts gebündelt sein. Runde Eintrittsquerschnitte eignen sich besonders zur Einkopplung von Licht aus punktförmigen Lichtquellen, beispielsweise Halogen-Kaltlichtreflektor-Lampen, die kommerziell erhältlich sind. Grundsätzlich kann der Lichtleiter-Querschnittswandler aber auch mit anderen Eintrittsquerschnitten bzw. Eintrittsflächen ausgebildet und damit optimal an andere Lampenformen angepaßt sein.

Durch die zwischen der Ausgangsfläche des Lichtleiter-Querschnittswandlers und der Lichtschaltmaske angeordnete Lichtleitplatte wird erreicht, daß die aus dem Lichtleiter-Querschnittswandler austretende Strahlung homogenisiert, d. h. gleichmäßig über die Lichtschaltmaske verteilt wird. Dies geschieht durch Vielfachreflexion des Lichtes zwischen den Plattenoberflächen.

Vorteilhaft ist der Einbau einer derartigen Lichtleitplatte insbesondere dann, wenn der Lichtleiter-Querschnittswandler aus einer Vielzahl von einzelnen Lichtleitfasern aufgebaut ist, der dann in seiner Austrittsfläche eine Lichtverteilung entsprechend der Anordnung und Struktur der meist kreisrunden Lichtleitfasern besitzt, die auch bei dichtester Packung die Austrittsfläche nicht völlig ausfüllen. Die Struktur der Lichtleitfasern würde sich dann im gedruckten Bild niederschlagen.

Nach einer vorteilhaften Weiterbildung der Erfindung ist zusätzlich zwischen der Lichtquelle und dem Lichtleiter-Querschnittswandler ein sich in Richtung des einfallenden Lichtes erstreckender Lichtleiterstab angeordnet, dessen Querschnitt dem Querschnitt der Eingangsfläche des Lichtleiter-Querschnittswandlers wenigstens annähernd entspricht.

Durch diesen zusätzlichen Lichtleiterstab wird erreicht, daß bereits auf der Eingangsseite des Lichtleiter-Querschnittswandlers vorhandene, inhomogene Lichtverteilungen durch Vielfachreflexion des Lichtes an der Innenseite des Lichtleitstabes ausgeglichen werden, so daß das auf die Lichtschaltmaske auftreffende Licht noch gleichmäßiger verteilt ist.

Die Zeichnung stellt ein Ausführungsbeispiel der Erfindung dar. Es zeigen :

Fig. 1 eine Vorrichtung zum Beleuchten einer zeilenförmigen Lichtschaltmaske, mit einem aus einzelnen Lichtleitfasern bestehenden Lichtleiter-Querschnittswandler, und

Fig. 2 eine Draufsicht dieser Vorrichtung.

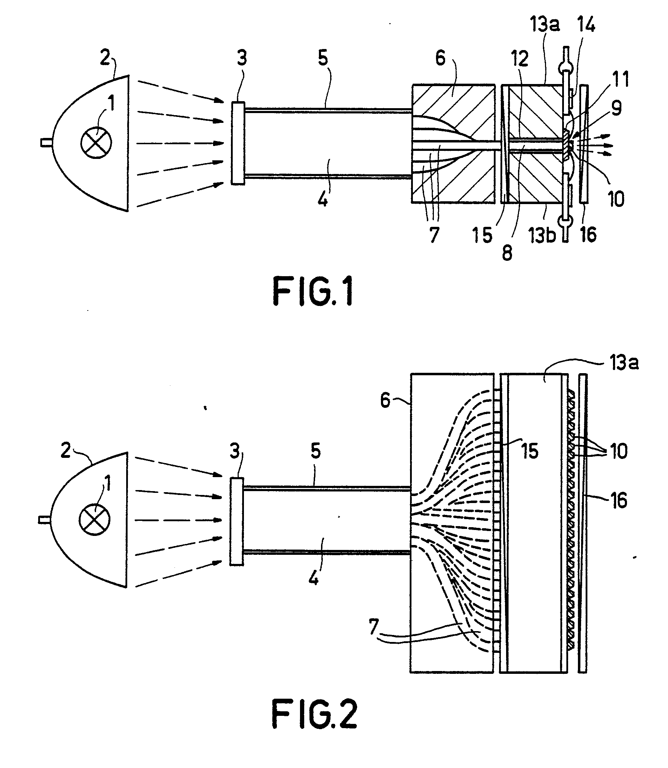

Die in Fig. 1 dargestellte Vorrichtung zur Beleuchtung einer Lichtschaltmaske besitzt eine radial- bzw. punktsymmetrische Lampe, z. B. eine Halogen-Kaltlichtreflektor-Lampe 1, die kommerziell erhältlich ist. Ihr Reflektor 2 ist dabei so ausgebildet, daß das von der Lampe 1 ausgestrahlte Licht über ein Wärmeschutzfilter 3 nahezu vollständig in einen Lichtleiterstab 4 eingestrahlt wird, der einen kreisrunden Querschnitt besitzt. Der Lichtleiterstab 4, der eine Länge von einigen cm besitzt, dient dazu, eine evtl. vorhandene, inhomogene Lichtverteilung auszugleichen. Dies geschieht dadurch, daß das in den Lichtleiterstab eingekoppelte und von der Lampe 1 kommende Licht innerhalb des Lichtleiterstabes 4 an seinen Außenwänden vielfach reflektiert wird, so daß dadurch die Lichtverteilung homogenisiert wird. Der Lichtleiterstab 4 kann dabei als Glasstab oder als transparenter Kunststoffstab ausgebildet und von Luft umgeben sein. Zur Verbesserung seiner Reflexionseigenschaften kann er zusätzlich an seiner Oberfläche eine Schicht 5 tragen, die aus einem reflektierenden Material, z. B. einem Metall, oder aus einer Schicht besteht, die einen geringeren Brechungsindex als der Lichtleiterstab 4 hat. Ferner kann der Lichtleiterstab 4 auch als Hohlstab mit innen verspiegelter Fläche (also als Licht-Hohlleiter) ausgebildet sein, z. B. in Form eines innen verspiegelten Kanals in einem Grundkörper.

Die Ausgangsfläche des Lichtleiterstabes 4 ist optisch mit der Eingangsfläche eines Lichtleiter-Querschnittswandlers 6 verbunden, der beispielsweise eine Vielzahl von einzelnen Lichtleitfasern 7 besitzt. Diese Lichtleitfasern 7 sind auf der Eingangsseite des Lichtleiter-Querschnittswandlers 6 zu einem kreisrunden Bündel zusammengefaßt und symmetrisch zur Ausgangsfläche des Lichtleiterstabes 4 angeordnet. Beide Flächen können beispielsweise miteinander verkittet sein. Auf der Ausgangsseite des Lichtleiter-Querschnittswandlers 6 sind die Lichtleitfasern 7 entlang einer Geraden nebeneinanderliegend angeordnet, wie Fig. 2 verdeutlicht. Dabei liefert jede Lichtleitfaser ausgangsseitig aufgrund der Wirkung des Lichtleiterstabes 4 praktisch die gleiche Strahlungsmenge, d. h. alle Lichtleitfasern erscheinen gleich hell.

Die so entlang einer Geraden erzeugte Lichtverteilung ist jedoch insoweit noch inhomogen, als sie durch die Struktur der Lichtleitfasern 7 selbst gestört ist. Die Lichtleitfasern 7 besitzen in der Regel einen kreisrunden Querschnitt, so daß dadurch, auch bei dichtester Packung der Lichtleitfasern entlang der Geraden, Bereiche entstehen, die abwechselnd strahlen oder dunkel sind.

Um diese Inhomogenität in der Lichtverteilung auszugleichen, wird die aus den Lichtleitfasern 7 austretende Strahlung in eine Lichtleitplatte 8 geleitet derart, daß die Lichtausbreitung parallel zur Plattenoberfläche verläuft. Durch Vielfachreflexion des Lichtes zwischen den Plattenoberflächen wird dann die Lichtverteilung homogenisiert. Das aus der Stirnfläche der Lichtleitplatte austretende Licht trifft dann auf eine Lichtschaltmaske 9, die aus einer Vielzahl von magneto-optischen Lichtmodulationselementen 10 besteht, welche auf einem Substrat 11 angeordnet sind. Die zeilenförmige Lichtschaltmaske 9 bzw. die Zeile der Lichtmodulationselemente 10 liegt dabei parallel zur Zeile der aus dem Lichtleiter-Querschnittswandler 6 austretenden Lichtleitfasern und ihr gegenüber. Die Lichtleitplatte 8 erstreckt sich also in einer Ebene, die durch die Zeile der aus dem Lichtleiter-Querschnittswandler 6 austretenden Lichtleitfasern 7 und die Zeile der Lichtschaltmaske 9 bzw. die Zeile der Lichtmodulationselemente 10 verläuft. Die Lichtleitplatte 8 besitzt dabei senkrecht zur Richtung der Zeile der Lichtmodulationselemente 10 eine Dicke, die nahezu der Ausdehnung der Lichtmodulationselemente 10 in dieser Richtung entspricht. Dagegen beträgt die Breite der Lichtleitplatte 8 in Richtung der einfallenden Strahlung zur Homogenisierung der Lichtverteilung einige cm, während die Länge der Lichtleitplatte 8 an die Zeilenlänge der Lichtmodulationselemente 10 bzw. an die Zeilenlänge der Lichtleitfasern 7 angepaßt ist.

Die Lichtleitplatte 8 kann beispielsweise als Glasplatte oder als transparente Kunststoffplatte ausgebildet sein. Sie besitzt einen höheren Brechungsindex als das sie umgebende Medium, so daß das Licht innerhalb der Lichtleitplatte 8 durch Totalreflexion geführt wird. Praktisch läßt sich dies dadurch erreichen, daß die Lichtleitplatte 8 in eine wenigstens mehrere μm dicke Kittschicht 12 eingebettet wird, deren Brechungsindex kleiner ist als der der Lichtleitplatte 8. Die Lichtleitplatte 8 kann aber auch mit Ausnahme ihrer Stirnseiten bzw. ihrer Lichteingangs- und Ausgangsflächen mit einer reflektierenden Schicht, z. B. einer Metallschicht, bedeckt sein.

Ferner kann die « Lichtleitplatte » auch als Licht-Hohlleiter mit rechteckförmigem Hohlleiter-Querschnitt (z. B. Schlitz in einem Metallblock) und innen verspiegelten Flächen ausgebildet sein.

Getragen wird die gesamte Lichtleitplatte 8 durch zwei quaderförmig ausgebildete Stützstreifen 13a, 13b, die beispielsweise aus Metall oder Kunststoff oder dergl. bestehen können, wobei die Breite der Stützstreifen der Breite der Lichtleitplatte 8 entspricht. Die Stützstreifen 13a, 13b lassen sich gleichzeitig als Träger für die Lichtschaltmaske 9 sowie für die zu ihrer elektronischen Ansteuerung erforderlichen integrierten Schaltkreise 14 verwenden. Die elektronischen Schaltkreise 14 sind beiderseits der Lichtschaltmaske 9 angeordnet und z. B. durch Bonden mit ihr verbunden.

Die Lichtschaltmaske 9 ist mit der Lichtleitplatte 8 vorzugsweise über eine Kittschicht verbunden. Dies gilt ebenso für einen eingangsseitigen Polarisator 15, der zwischen dem Lichtleiter-Querschnittswandler 6 und der Lichtleitplatte 8 angeordnet ist. Dabei wird der Polarisator 15 ebenfalls von den Stützstreifen 13a, 13b getragen. Ein ausgangsseitiger Polarisator 16 befindet sich, in Strahlenrichtung gesehen, hinter der Lichtschaltmaske 9.

Der Lichtleiter-Querschnittswandler 6 ist entsprechend der Fig. 1 und 2 so nahe wie möglich an der Lichtleitplatte 8 bzw. am eingangsseitigen Polarisator 15 angeordnet. Vorzugsweise sind die Lichtleitfasern 7 ausgangsseitig mit dem Polarisator verkittet. Der Vorteil der Verkittung der einzelnen optischen Elemente miteinander besteht darin, daß praktisch ohne Lichtverluste das in den Lichtleiterstab 4 eingestrahlte Licht zur Lichtschaltmaske 9 hingeführt wird.

In den Fig. 1 und 2 wurde als Lampe beispielsweise eine kugelsymmetrische Halogen-Kaltlichtreflektor-Lampe verwendet. Sinngemäß können aber auch andere Lichtquellen, wie z. B. Gasentladungslampen, eingesetzt werden, die ggf. eine andere Geometrie besitzen. Die Eingangsfläche des Lichtleiter-Querschnittswandlers 6 ist dann an diese Lampengeometrie anzupassen. Dazu können die Lichtleitfasern 7 eingangsseitig entsprechend gebündelt werden. Ebenso ist natürlich der Querschnitt des Lichtleiterstabes 4 an die veränderte Eingangsfläche des Lichtleiter-Querschnittswandlers 6 bzw. an die veränderte Lampengeometrie anzupassen.

**Patentansprüche**

1. Vorrichtung zum Beleuchten einer zeilenförmigen, aus einer Vielzahl von magneto-optischen Lichtmodulationselementen bestehenden, zwischen Polarisatoren liegenden Lichtschaltmaske, mit einer Lichtquelle, sowie einer Übertragungsoptik zur Übertragung eines möglichst großen Anteils des von der Lichtquelle abgestrahlten Lichtes auf die Lichtschaltmaske, und mit wenigstens einem im Lichtweg zwischen der Lichtquelle und der Lichtschaltmaske angeordneten optischen Körper zur Homogenisierung der Lichtverteilung, dadurch gekennzeichnet, daß die Übertragungsoptik aus einem Lichtleiter-Querschnittswandler (6) besteht, dessen Eingangsfläche der Geometrie der Lichtquelle (1, 2) und dessen Ausgangsfläche der Geometrie der zeilenförmigen Lichtschaltmaske (9) angepaßt ist, und daß zwischen dem Lichtleiter-Querschnittswandler und der Lichtschaltmaske eine dünne Lichtleitplatte (8) angeordnet ist, in deren Plattenebene die Zeilenrichtung sowohl der Austrittsfläche des Lichtleiter-Querschnittswandlers als auch der Lichtschaltmaske verläuft.

2. Vorrichtung nach Anspruch 1, dadurch gekennzeichnet, daß zwischen der Lichtquelle (1, 2) und dem Lichtleiter-Querschnittswandler (6) ein sich in Richtung des einfallenden Lichtes erstreckender Lichtleiterstab (4) angeordnet ist, dessen Querschnitt dem Querschnitt der Eingangsfläche des Lichtleiter-Querschnittswandlers wenigstens annähernd entspricht.

3. Vorrichtung nach Anspruch 1 oder 2, dadurch gekennzeichnet, daß der Lichtleiter-Querschnittswandler (6) aus einer Vielzahl von Lichtleitfasern (7) besteht.

4. Vorrichtung nach Anspruch 1, 2 oder 3, dadurch gekennzeichnet, daß die Lichtleitplatte (8) bzw. der Lichtleiterstab (4) aus Glas oder transparentem Kunststoff bestehen und, mit Ausnahme der Eingangs- und Ausgangsflächen, von einem Medium (12 bzw. 5) mit kleinerem Brechungsindex als der von Glas oder transparentem Kunststoff oder von einer reflektierenden Schicht umgeben sind.

5. Vorrichtung nach einem der Ansprüche 1 bis 4, dadurch gekennzeichnet, daß die Lichtleitplatte (8) in einen Körper (13a, b) eingekittet ist, der die Lichtschaltmaske (9) sowie ihre elektronischen Ansteuerschaltungen (14) trägt.

6. Vorrichtung nach einem der Ansprüche 1 bis 5, dadurch gekennzeichnet, daß auf der Eingangsseite der Lichtleitplatte (8) eine Polarisationsfolie (15) aufgekittet ist.

7. Vorrichtung nach einem der Ansprüche 1 bis 6, dadurch gekennzeichnet, daß die Lichtquelle (1, 2) wenigstens annähernd punktsymmetrisch und die Eingangsfläche des Lichtleiter-Querschnittswandlers (6) kreisförmig ist.

8. Vorrichtung nach einem der Ansprüche 1 bis 7, dadurch gekennzeichnet, daß zwischen der Lichtquelle (1, 2) und dem Lichtleiterstab (4) ein Wärmeschutzfilter (3) angeordnet ist.

9. Vorrichtung nach einem der Ansprüche 1, 2 und 5 bis 8, dadurch gekennzeichnet, daß der Lichtleiterstab (4) bzw. die Lichtleitplatte (8) als Hohlleiter mit innen verspiegelter Oberfläche ausgebildet sind.

**Claims**

1. A device for the illumination of a line-shaped light switching mask which consists of a plurality of magnet-optical light modulation elements and which is arragned between polarizers, comprising a light source as well as a transmission optical system for transmitting an as large as possible part of the light emitted by the light source to the light switching mask, and also comprising at least one optical body which is arranged in the light path between the light source and the light switching mask in order to homogenize the light distribution, characterized in that the transmission optical system comprises a light conductor cross-section adapter (6) whose entrance surface corresponds to the geometry of the light source (1, 2) and whose exit surface corresponds to the geometry of the lineshaped light switching mask, between the light conductor cross-section adapter and the light switching mask there being arranged a thin light conductor plate (8), the line direction of the exit surface of the light conductor cross-section adapter as well as that of the light switching mask extending in the plane of said light conductor plate.

2. A device as claimed in Claim 1, characterized in that between the light source (1, 2) and the light conductor cross-section adapter (6) there is arranged a light conductor rod (4) which extends in the direction of the incident light and whose cross-section corresponds at least approximately to the cross-section of the entrance surface of the light conductor cross-section adapter.

3. A device as claimed in Claim 1 or 2, characterized in that the light conductor cross-section adapter (6) consists of a plurality of optical fibres (7).

4. A device as claimed in Claim 1, 2 or 3, characterized in that the light conductor plate (8) and/or the light conductor rod (4) are made of glass or a transparent plastics and are surrounded, with the exception of the entrance and exit surfaces, by a medium (12, 5) which has a refractive index which is lower than that of glass or transparent plastics, or by a reflective layer.

5. A device as claimed in one of the Claims 1 to 4, characterized in that the light conductor plate (8) is cemented in a body (13a, b) which supports the light switching mask (9) as well as its electronic drive circuits (14).

6. A device as claimed in one of the Claims 1 to 5, characterized in that a polarization foil (15) is cemented to the entrance side of the light conductor plate (8).

7. A device as claimed in one of the Claims 1 to 6, characterized in that the light source (1, 2) is at least approximately point symmetrical, the enetrance surface of the light conductor cross-section adapter (6) being circular.

8. A device as claimed in one of the Claims 1 to 7, characterized in that a heat protection filter (3) is arranged between the light source (1, 2) and the light conductor rod (4).

9. A device as claimed in one of the Claims 1, 2 and 5 to 8, characterized in that the light conductor rod (4) or the light conductor plate (8) are constructed as hollow conductors having an internally reflective surface.

**Revendications**

1. Dispositif pour éclairer un masque linéaire de commutation de lumière constitué par une pluralité d'éléments de modulation de lumière magnéto-optiques et situé entre des polarisateurs, dispositif comportant une source lumineuse, un système optique de transmission pour transmettre une partie maximale de la lumière émise par la source lumineuse au masque de commutation de lumière et, au moins un corps optique disposé dans le trajet optique entre la source lumineuse et le masque de commutation de lumière et servant à homogénéiser la distribution de lumière, caractérisé en ce que le système optique de transmission est constitué par un adaptateur de section (6) dont la surface d'entrée est adaptée à la géométrie de la source lumineuse (1, 2) et dont la surface de sortie est adaptée à la géométrie du masque linéaire de commutation de lumière (9) et en ce qu'entre l'adaptateur de section et le masque de commutation de lumière, est disposée une mince plaque de guidage de lumière (8) dans le plan duquel s'étendent à la fois les directions de ligne de la surface de sortie de l'adaptateur et celle du masque de commutation de lumière.

2. Dispositif selon la revendication 1, caractérisé en ce que, entre la source lumineuse (1, 2) et l'adaptateur de section (6), est disposée une barre de guidage de lumière (4) s'étendant dans la direction de la lumière incidente et dont la section transversale correspond au moins pratiquement à la section transversale de la surface d'entrée de l'adaptateur de section.

3. Dispositif selon la revendication 1 ou 2, caractérisé en ce que l'adaptateur de section (6) est constitué par une pluralité de fibres optiques (7).

4. Dispositif selon la revendication 1, 2 ou 3, caractérisé en ce que la plaque de guidage de lumière (8) et/ou la barre de guidage de lumière (4) sont en verre ou en matière plastique transparente et en ce que, à l'exception de leurs surfaces d'entrée et de sortie, elles sont entourées soit d'un milieu (12, 5) d'indice de réfraction inférieur à celui du verre ou de la matière plastique transparente, soit d'une couche réflectrice.

5. Dispositif selon l'une des revendications 1 à 4, caractérisé en ce que la plaque de guidage de lumière (8) est mastiquée dans un corps (13a, b) supportant le masque de commutation de lumière (9) aussi bien que ces circuits de commande électroniques (14).

6. Dispositif selon l'une des revendications 1 à 5, caractérisé en ce que, sur la face d'entrée de la plaque de guidage de lumière (8), est cimentée une feuille de polarisation (15).

7. Dispositif selon l'une des revendications 1 à 6, caractérisé en ce que la source lumineuse (1, 2) a au moins pratiquement une symétrie ponctuelle et en ce que la surface d'entrée de l'adaptateur de section (6) est circulaire.

8. Dispositif selon l'une des revendications 1 à 7, caractérisé en ce qu'un filtre anticalorique (3) est disposé entre la source lumineuse (1, 2) et la barre de guidage de lumière (4).

9. Dispositif selon l'une des revendications 1, 2 et 5 à 8, caractérisé en ce que la barre de guidage de lumière (4) et/ou la plaque de guidage de lumière (8) sont realisées sous la forme de guides creux présentant une surface intérieure réflectrice.

FIG.1

FIG.2